# EUROPÄISCHE PATENTANMELDUNG

(11) **EP 2 916 405 A1**
(43) Veröffentlichungstag der Anmeldung: **09.09.2015**
(21) Anmeldenummer: 15151453.6
(22) Anmeldetag: 16.01.2015
(51) Int. Cl.: H02G 1/04

(54) **Schutzbrücke**

(30) Priorität: 19.11.2013 AT 8932013
(71) Anmelder: European Trans Energy GmbH, 1100 Wien (AT)
(72) Erfinder: Höfler, Jörg, 8160 Weiz (AT); Weinberger, Herbert, 1160 Wien (AT)
(74) Vertreter: Patentanwälte Puchberger, Berger und Partner

(57) **Zusammenfassung**

Die Erfindung bezieht sich auf eine Schutzbrücke (1) zum Überspannen von zu schützenden Objekten, wie z.B. Stromfreileitungen, Straßen, Bahnstrecken u.dgl. während der Montage oder Demontage von Leitungsseilen, bei welcher ein trogförmiger Träger (5) vorgesehen ist, der an einem Hebezeug (2) aufhängbar und mittels Spannseilen (3) festlegbar ist. Für ein lagerichtiges Einziehen auch mehrerer Leiterseile sind am Einlauf (6) und am Auslauf (6)des trogförmigen Trägers (6) wenigstens auf einer Achse nebeneinander mehrere Rollen (8) mit einer umlaufenden Nut (9) am Mantel angeordnet

## Beschreibung

Die Erfindung bezieht sich auf eine Schutzbrücke zum Überspannen von zu schützenden Objekten, wie z.B. Stromfreileitungen, Straßen, Bahntrassen u.dgl. während der Montage oder Demontage von Leitungsseilen u.dgl. während der Montage oder Demontage von Leitungskabeln, bei welcher ein trogförmiger Träger vorgesehen ist, der an einem Hebezeug aufhängbar und mittels Spannseilen festlegbar ist.

Derzeit werden für die Montage oder Demontage von Leitungsseilen bei Kreuzungen mit Stromfreileitungen, Straßen oder Bahntrassen verschiedene Schutzeinrichtungen erstellt, um während des laufenden Betriebes auf den zu schützenden Objekten die nötigen Montage- bzw. Demontagearbeiten durchführen zu können.

Insbesondere werden an beiden Seiten der zu schützenden Objekte Schutzgerüste aufgestellt, welche dann mit die Objekte überspannenden Netzen verbunden werden. Diese Schutzgerüste sind in der Regel Stahlrohrkonstruktionen, deren Höhe und Breite von dem zu schützenden Kreuzungsobjekt abhängig sind. Das Netz wird von speziellen Kunstfaserseilen getragen, welche zwischen den Schutzgerüsten gespannt und an der Oberkante der Gerüste verankert sind. Dazu müssen die Schutzgerüste z.B. über Erdanker stabilisiert werden. Für das Spannen der Kunstfasertragseile sind üblicherweise bei Bahntrassen bzw. Straßen entsprechende Verkehrspausen und bei Stromfreileitungen eine Freischaltung erforderlich.

Außerdem erfordern die Schutzgerüste gesonderte statische Berechnungen sowie behördliche Abnahmen. Diese Maßnahmen sind sowohl zeit- als auch kostenintensiv.

Aus diesem Grunde ist gemäß der DE 200 07 840 U1 vorgeschlagen worden, eine Seilzugschutztraverse einzusetzen, welche mittels eines Hebezeuges wie beispielsweise eines Autokranes gehoben, in der angehobenen Lage gehalten und mittels Spannseilen fixiert wird. Bei dieser bekannten Ausbildung ist der die Seilzugschutztraverse bildende trogförmige Träger durch einen Rahmen gebildet, an dessen horizontale Auflage durch walzenförmige Rollen gebildet ist, die in bestimmten Abständen zueinander angeordnet sind. Die seitlichen Begrenzungen der Auflage sind durch vertikal stehende walzenförmige Rollen gebildet. Die Traverse ist an den den Seileinlauf und den Seilauslauf bildenden Enden jeweils nach unten abgeknickt.

Durch diese bekannte Ausbildung können aufwändige Schutzgerüste und die damit verbundenen Nachteile zwar vermieden werden, jedoch ist diese Einrichtung nur für das Einziehen jeweils eines einzelnen Leiterseiles geeignet, da es bei mehreren Zeilen zu einem Verdrillen der Seile kommen kann.

Diese Nachteile werden erfindungsgemäß dadurch vermieden, dass am Einlauf und am Auslauf des trogförmigen Trägers wenigstens auf einer Achse nebeneinander mehrere Rollen mit einer Umfangsnut am Mantel angeordnet sind. Dadurch werden bei Einziehen von mehreren Leiterseilen diese geordnet in den trogförmigen Träger eingeleitet und am anderen Ende wieder ausgeleitet, so dass es im Inneren des Trägers nicht zu einem Verdrillen der Leiterseile kommt.

Zum Erleichtern des Einführens und des Abziehens der Leiterseile aus dem trogförmigen Träger sind die Rollen an Tandemrollenwippen angeordnet. Dabei kann die Anzahl der nebeneinander liegenden Rollen zumindest der Anzahl der einzuziehenden Leiterseile entsprechen, wobei immer eine in der Mitte des Trogquerschnittes angeordnete Rolle für die Führung der Zieh- und Vorspannseile vorgesehen ist. Damit ist ein zentriertes Einziehen der Leiterseile, z.B. mittels eines Ziehteppichs, ermöglicht. Zur sicheren Führung des Zieh- und/oder Vorspannseiles kann dieser in der Mitte angeordneten Rolle ein Rollenseilfenster zugeordnet sein, das am Ende eines am trogförmigen Träger, vorzugsweise über eine horizintale Achse schwenkbar gelagerten, Spurarms angeordnet ist. Dieses Rollenseilfenster kann durch drei Zylinderrollen gebildet sein, von denen eine um eine zu der Achse der zugeordneten Rolle in der Mitte des Troges parallele Achse und die beiden anderen Zylinderrollen seitlich der einen Zylinderrolle um je eine stehende Achse drehbar sind.

Der Trog kann zwischen den Einlauf- und den Auslaufrollen einen geschlossenen Boden und geschlossene Seitenwandungen aufweisen, wobei sowohl der Boden als auch die Seitenwandungen mit einer Gleitschicht versehen sein, um Beschädigungen an den gezogenen Leiterseilen zu vermeiden. Für das Angreifen des Hebezeuges am Trog sind C-förmige Tragarme vorgesehen, bei welchen die Angriffspunkte für das Hebezeug am freien Ende des oberen Schenkels des Armes oberhalb der Mittelachse des Troges vorgesehen sind, wobei zwei Tragarme vorgesehen sind, die mit dem anderen Schenkel an der Unterseite des Troges mit diesem, vorzugsweise verschwenkbar, verbunden sind. Damit wird eine besonders stabile Aufhängung erzielt, wobei bei schwenkbarer Lagerung die Tragarme für den Transport auf den Trog abgeklappt werden können.

In der Zeichnung ist ein Ausführungsbespiel des Erfindungsgegenstandes dargestellt.

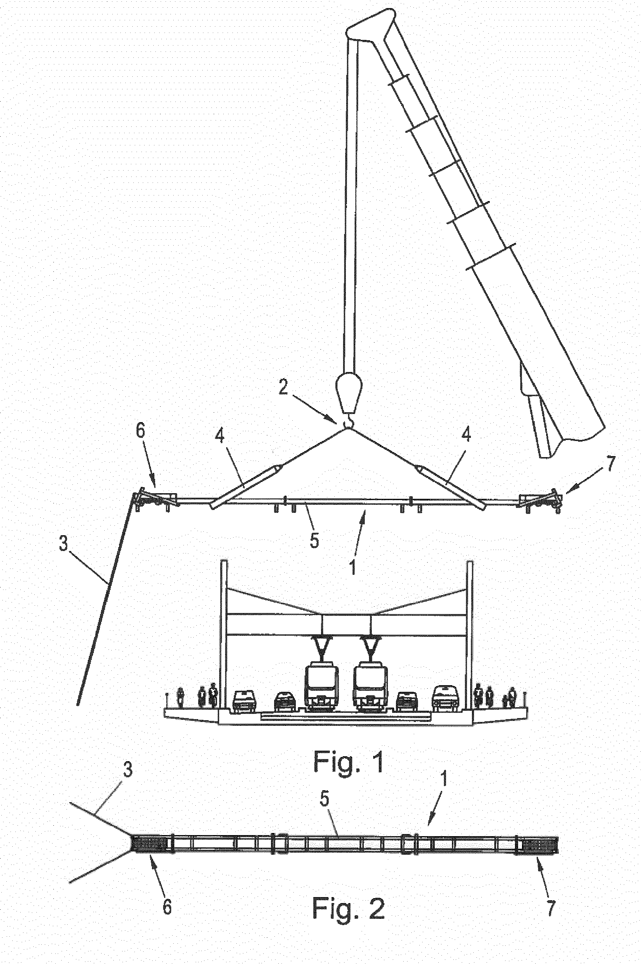

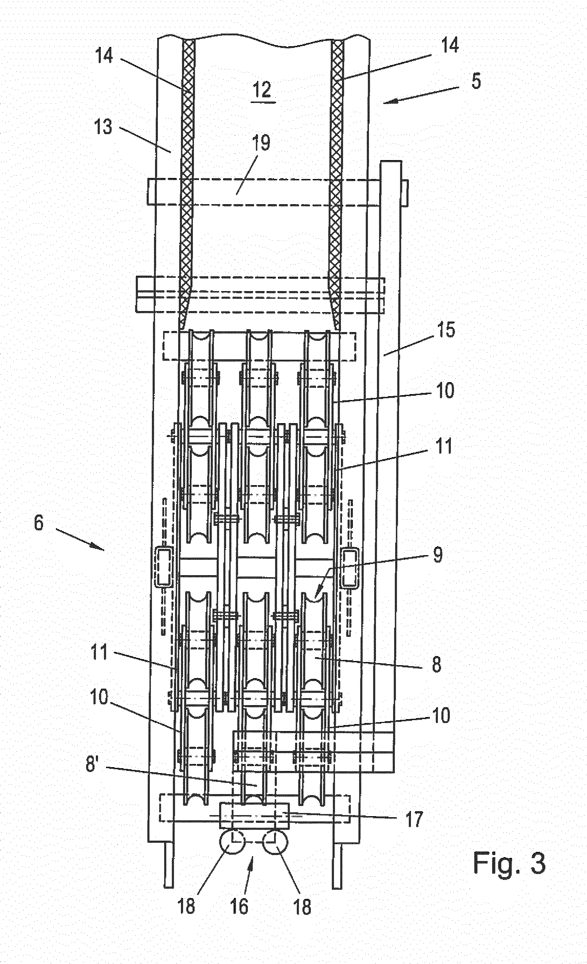

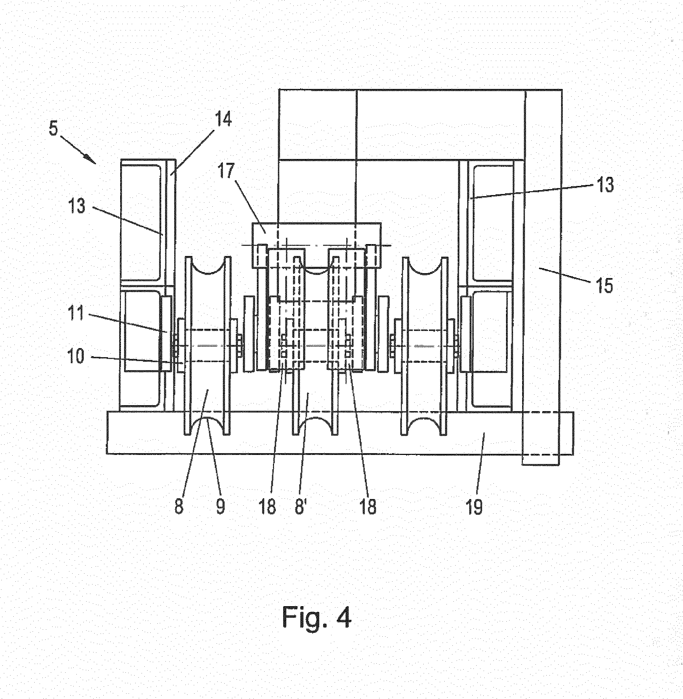

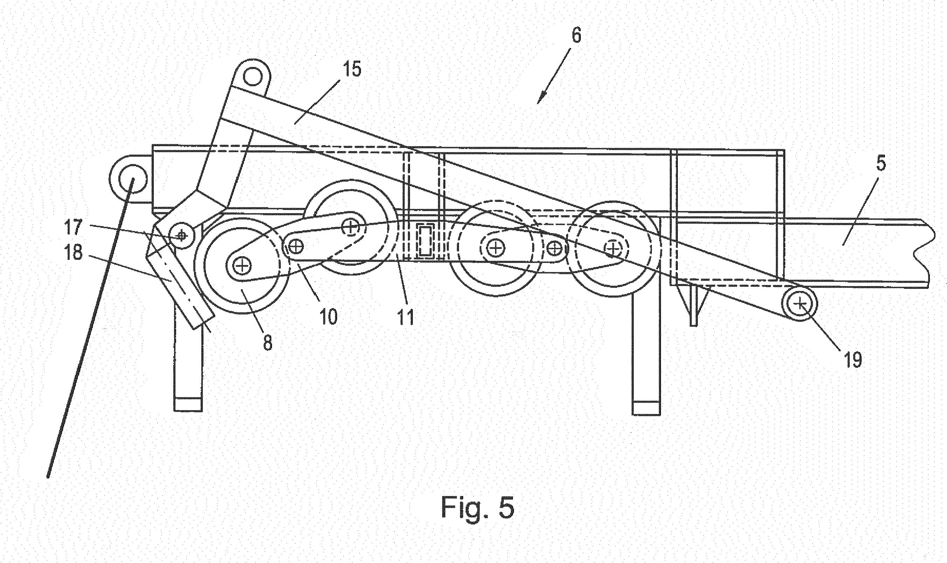

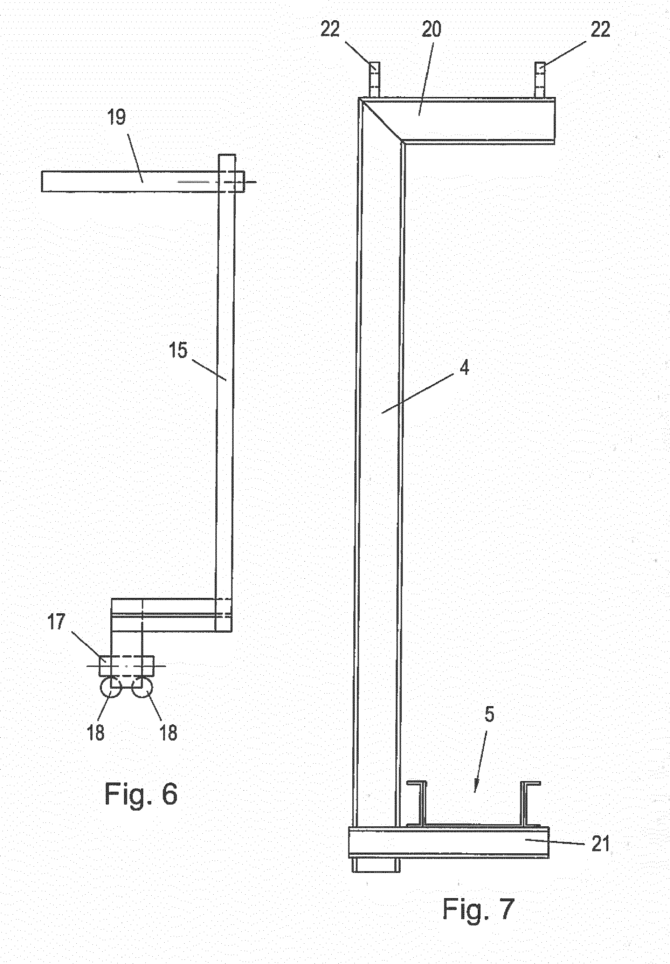

Fig. 1 zeigt als Prinzipskizze die Anwendung der erfindungsgemäßen Schutzbrücke. Fig. 2 ist eine Draufsicht auf die gesamte Schutzbrücke gemäß Fig. 1. Fig. 3 gibt eine Draufsicht auf das einlaufseitige Ende der Schutzbrücke, wobei das auslaufseitige Ende spiegelbildlich ausgebildet ist. Fig. 4 gibt das einlaufseitige Ende in Stirnansicht wieder. Fig. 5 veranschaulicht das einlaufseitige Ende in Seitenansicht. Fig. 6 ist eine Detailansicht des Spurarmes mit Seilfenster. Fig. 7 zeigt den Tragarm mit eingesetztem trogartigen Träger.

Mit 1 ist die erfindungsgemäße Schutzbrücke bezeichnet, die über ein Hebezeug 2 angehoben und über Spannseile 3 fixiert ist. Das Hebezeug 2 greift über Tragarme 4 an einem trogartigen Träger 5 an, der an der Eilaufseite mit einem Rollensatz 6 und an der Auslauseite mit einem Rollensatz 7 versehen ist. Die Tragarme 4 sind als C-profilförmigen Träger ausgebildet, von welchen der obere freie Schenkel 20 mit dem Anlenkpunkten 22 mit dem Hebezeug verbunden ist und der untere Schenkel 21 an der Unterseite des trogartigen Trägers 5 angreift. Bevorzugt sind die unteren Schenkel 21 am Träger 5 schwenkbar gelagert, um z.B. für den Transport oder die Lagerung mit dem oberen Schenkel 20 an den Träger 5 geklappt werden zu können.

Jeder der Rollensätze 6, 7 ist mit Rollen 8 ausgestattet, welche am Mantel mit einer umlaufenden Nut 9 versehen ist. Die Rollen 8 sind paarweise hintereinander an einem Rollenträger 10 gelagert, der seinerseits an einem Tandemträger 11 schwenkbar befestigt ist. Jeder der Tandemträger 11 ist am trogartigen Träger 5 um eine zu den Rollenachsen und den Schwenkachsen der Rollenträger parallele Achse schwenkbar befestigt.

In vorliegendem Ausführungsbeispiel sind drei Rollen 8 nebeneinander auf einer gemeinsamen Achse angeordnet, wobei die Anzahl der Rollen 8 auf einer Achse zumindest der Anzahl der einzuziehenden Leiterseile entspricht. Die Anzahl der Rollen sollte allerdings immer eine ungerade Zahl sein, da eine Rolle 8' in der Mitte des Trogquerschnittes angeordnet sein muss um das zentrale Einziehen eines Zugseiles und nachfolgend eines Vorspannseiles zu ermöglichen.

Dieser zentralen Rolle 8' zugeordnet ist ein sogenanntes Seilfenster 16 vorgesehen, das an einem Spurarm 15 montiert ist. Dieser Spurarm 15 ist seinerseits am Ende des trogartigen Trägers 5 angebracht, wobei die Anbringung bevorzugt über eine Schwenklagerung 19 erfolgt, deren Achse parallel zu den Rollenachsen verläuft. Das Seilfenster ist aus einem Rollensatz aus einer parallel zu den Rollenachsen gelagerten Zylinderrolle 17 und zwei seitlich dieser Zylinderrolle 17 stehend gelagerten Zylinderrollen 18 zusammengesetzt. Bei Gebrauch ist das Seilfenster 16 zu der zentralen Rolle 8' geklappt, wobei die stehend gelagerten Zylinderrollen 18 seitlich der zentralen Rolle 8' und die parallel zu den Rollenachsen gelagerte Zylinderrolle 17 am Außenumfang der zentralen Rolle 8' liegt. Die die Zylinderrollen 17, 18 tragenden Spurarme 15 sind mittels nicht dargestellte Seilzüge aus der in der Zeichnung wiedergegebenen Arbeitsstellung in eine die Rollen 8 freigebende Stellung verschwenkbar, wobei an Stelle von Seilzügen auch Antriebsmotore oder durch das Einziehen der Leiterseile direkt betätigbare Stellorgane eingestzt werden können.

Der das zu schützende Objekt überspannende trogartige Träger 5, der einstückig oder in Längsrichtung modulartig mehrstückig ausgebildet sein kann, besteht aus einem Trogboden 12 und Trogseitenwandungen 13, wobei sowohl der Trogboden 12 als auch die Trogseitenwandungen 13 mit einer Auskleidung aus gleitfähigem Material 14 versehen ist.

Wenn eine neue Leitung zu verlegen ist, dann wird in den trogartigen Träger 5 der Schutzbrücke 1 ein Zugseil eingelegt, das an der Auslaufseite mit einem Gewicht beschwert ist. Danach wird die Schutzbrücke 1 mittels des Hebezeuges 2 angehoben und in die das zu schützende Objekt überspannende Position geschwenkt, wonach dann die Schutzbrücke 1 in dieser Lage durch Spannseile 3 gesichert wird. Das Zugseil wird während des Anhebens in einer solchen Lage gehalten, dass das Gewicht aus dem Rollensatz 7 aus der Auslaufseite nur so weit heraushängt, dass es über das zu schützende Objekt gehoben werden kann. Das Zugseil ist dabei zwischen den stehend gelagerten Zylinderrollen 18 hindurch über die zentrale Rolle 8' geführt und durch die horizontal gelagerte Zylinderrolle in der Nut 9 der zentralen Rolle 8' gehalten. Nach der Fixierung der Schutzbrücke 1 über die Spannseile 3 wird an der Einlaufseite das Zugseil nachgegeben bis das Gewicht zum Boden abgesenkt ist, wonach dann das Zugseil weiter eingezogen und über die Halterung am nächsten Tragmast der zu erstellenden Freileitung gelegt. Das Ziehen erfolgt so lange bis das gesamte Seilstück ausgezogen ist. Dann wird am vorderen Ende des Zugseils ein Vorspannseil befestigt und das Zugseil zurückgezogen, bis das Vorspannseil bis zum Ausgangspunkt des Zugseiles zurückgezogen ist. An dieses Vorspannseil wird nun ein sogenannter Ziehteppich befestigt, an dessen Rückseite die Leiterseile in der gewünschten Anzahl angeschlossen sind. Der Ziehteppich ist ein Schlitten dessen Spurweite, also der Abstand der Schlittenkufen, der Breite des trogartigen Trägers 5 entspricht, wobei die Spurweite den Rollenabstand und damit die Trogbreite bestimmt. Der Ziehteppich gleitet während des Einziehvorgangs in diesem Träger. Die an der Rückseite des Ziehteppichs angeschlossenen Leiterseile legen sich dabei in die Nuten 9 der zugeordneten Rollen 8 des Rollensatzes 6 an der Einlaufseite und des Rollensatzes 7 an der Auslaufseite ein und werden darin durch die Schwerkraft gehalten.

Nach Einziehen der Leiterseile werden diese gespannt wonach die Schutzbrücke 1 abgesenkt wird bis die Leiterseile frei sind. Die Schutzbrücke 1 wird dann nach Lösen der Spannseile 3 so aus der Lage unterhalb der gespannten Leiterseile herausgeschwenkt, dass die Leiterseile an der freien Seite der Tragarme 4 zwischen den beiden Schenkeln 20 und 21 aus der Schutzbrücke 1 heraustreten, welche dann seitlich aus dem Leiterbereich herausgeschwenkt und abgelegt wird.

Sollen bereits bestehende Leiterseile abgenommen werden, dann wird die Schutzbrücke 1 unterhalb der abzunehmenden Leiterseile eingeschwenkt, wobei die abzunehmenden Leiterseile zwischen den Schenkel 20 und 21 der C-Profil-formigen Tragarme eingeführt werden. Nach Fixierung der Schutzbrücke 1 werden dann die abzunehmenden Leiterseile durch Lösen der Abspannung abgesenkt und in den trogartigen Träger 5 abgelegt. In dieser Lage können dann die Leiterseile gesteuert abgezogen werden, wobei bei einem Austausch der abzunehmenden Leiterseile an den Enden dieser Seile bereits die neuen Seile angeschlossen und mit dem Abziehen des auszutauschenden Leiterseils über die Schutzbrücke 1 gezogen und in der Endposition gespannt werden kann. Der Abbau der Schutzbrücke erfolgt dann in gleicher Weise wie vorstehend in Bezug auf die Neuanlage einer Seiltrasse beschrieben ist.

## Patentansprüche

1. Schutzbrücke zum Überspannen von zu schützenden Objekten, wie z.B. Stromfreileitungen, Straßen, Bahnstrecken u.dgl. während der Montage oder Demontage von Leitungsseilen, bei welcher ein trogförmiger Träger vorgesehen ist, der an einem Hebezeug aufhängbar und mittels Spannseilen festlegbar ist, **dadurch gekennzeichnet, dass** am Einlauf (6) und am Auslauf (6)des trogförmigen Trägers (6) wenigstens auf einer Achse nebeneinander mehrere Rollen (8) mit einer umlaufenden Nut (9) am Mantel angeordnet sind.

2. Schutzbrücke nach Anspruch 1, **dadurch gekennzeichnet, dass** die Rollen(8) auf Tandemrollenwippen (10,11) angeordnet sind.

3. Schutzbrücke nach Anspruch 1 oder 2, **dadurch gekennzeichnet, dass** die Anzahl der nebeneinander liegenden Rollen (8) zumindest der Anzahl der einzuziehenden Leiterseile entspricht, wobei immer eine in der Mitte des Trogquerschnittes angeordnete Rolle (8') für die Führung der Zieh- und Vorspannseile vorgesehen ist.

4. Schutzbrücke nach Anspruch 3, **dadurch gekennzeichnet, dass** dieser in der Mitte angeordneten Rolle (8') ein Rollenseilfenster (16) zugeordnet ist, das am Ende eines an trogförmigen Träger (5), vorzugsweise um eine horizontale Achse schwenkbar gelagerten Spurarms (15) angeordnet ist.

5. Schutzbrücke nach Anspruch 4, **dadurch gekennzeichnet, dass** das Rollenseilfenster (16) durch drei Zylinderrollen (17,18) gebildet ist, von denen eine (17) um eine zu der Achse der Rolle (8') in der Mitte des Troges (5) parallele Achse und die beiden anderen Zylinderrollen (18) seitlich der einen Zylinderrolle um je eine stehende Achse drehbar sind.

6. Schutzbrücke nach einem der Ansprüche 1 bis 5, **dadurch gekennzeichnet, dass** der Trog zwischen den Einlauf- (6) und den Auslaufrollen (7) einen geschlossenen Boden (12) und geschlossene Seitenwände (13) aufweist, wobei sowohl der Boden (12) als auch die Seitenwände (13) mit einer Gleitschicht (14) versehen sind.

7. Schutzbrücke nach einem der Ansprüche 1 bis 6, **dadurch gekennzeichnet, dass** für das Angreifen des Hebezeuges (2) am Trog (5) C-förmige Tragarme (4) vorgesehen sind, bei welchen die Angreifpunkte des Hebezeuges (22) am freien Ende des oberen Schenkels (20) der Tragarme (4) vorgesehen sind, wobei wenigstens zwei Tragarme (4) vorgesehen sind, die mit den anderen Schenkeln (21) an der Unterseite des Troges (5) mit diesem, vorzugsweise schwenkbar, verbunden sind.
